(19) Europäisches Patentamt / European Patent Office / Office européen des brevets

(11) **EP 4 644 114 A1**

(12) **EUROPEAN PATENT APPLICATION**
published in accordance with Art. 153(4) EPC

(43) Date of publication:
**05.11.2025 Bulletin 2025/45**

(21) Application number: **24750340.2**

(22) Date of filing: **31.01.2024**

(51) International Patent Classification (IPC):
**B32B 9/00** (2006.01)    **B32B 27/32** (2006.01)
**B32B 27/40** (2006.01)    **B65D 65/40** (2006.01)

(52) Cooperative Patent Classification (CPC):
**B32B 9/00; B32B 27/32; B32B 27/40; B65D 65/40**

(86) International application number:
**PCT/JP2024/003087**

(87) International publication number:
**WO 2024/162391 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2023  JP 2023014720
21.04.2023  JP 2023070367**

(71) Applicant: **Toppan Holdings Inc.
Tokyo 110-0016 (JP)**

(72) Inventor: **TAKIZAWA, Seiji
Tokyo 110-0016 (JP)**

(74) Representative: **Hasegawa, Kan
Patentanwaltskanzlei Hasegawa
Untere Hauptstraße 56
85354 Freising (DE)**

(54) **LAMINATED BODY, PACKAGING MATERIAL, PACKAGE, AND PACKAGED ARTICLE**

(57)    There is provided a laminate excellent in abuse resistance and adhesion, and a packaging material, a package, and a packaged article including the laminate.

The laminate (10) includes a first substrate layer (1), an anchor coat layer (2), and an inorganic barrier layer (3) in this order, wherein the first substrate layer (1) contains a polyolefin, and the anchor coat layer (2) has a sectional composite elastic modulus in a range of 3.5 to 6.5GPa and a thickness in a range of 0.4 to 3.0 μm.

FIG. 1

**Description**

FIELD

The present invention relates to a laminate, a packaging material, a package, and a packaged article.

BACKGROUND

A packaging material for storing foods and beverages, pharmaceuticals, and the like for a long period of time is required to have gas barrier properties that blocks ingress of oxygen, water vapor, and other gases that alter a content into the package. On the other hand, in recent years, packaging materials have been required to have high recyclability, and a movement to switch conventional packaging materials to all-polyolefin mono-material packages having good recyclability has been promoted not only in Japan but also worldwide.

As a gas barrier film used for the packaging material, various gas barrier films have been conventionally developed, and for example, there is a vapor deposited film in which an inorganic coating layer of silicon oxide, aluminum oxide, or the like is formed as a gas barrier layer on a polymer film by a vacuum deposition method, a sputtering method, or the like. Such a gas barrier film has a problem that when a polyolefin layer is used as a polymer layer, the gas barrier properties is deteriorated as compared with a polyester layer such as polyethylene terephthalate. In addition, there is also a problem that adhesion between the polymer film and the inorganic coating layer is not sufficient.

In order to improve the gas barrier properties of the vapor deposited film, a technique of providing a third layer formed of a resin material as a planarization layer, an adhesion layer, or the like between the polymer film and the inorganic coating layer has been proposed (see, for example, Patent Literatures 1 and 2).

CITATION LIST

PATENT LITERATURE

Patent Literature 1: WO 2022/056095 A
Patent Literature 2: WO 2022/220200 A

SUMMARY

The packaging material to be subjected to a high-temperature and high-pressure or high-temperature and high-humidity environment such as a retort treatment or a boil treatment is required to have particularly high performance. That is, the gas barrier film used for such a packaging material is required to have excellent abuse resistance capable of maintaining the gas barrier properties at a high level even when receiving physical stress such as bending after a severe treatment such as the retort treatment. Further, such a gas barrier film is also required to have excellent adhesion capable of maintaining a high interlayer adhesive force even after the severe treatment such as the retort treatment.

An object of the present invention is to provide a laminate excellent in abuse resistance and adhesion, and a packaging material, a package, and a packaged article including the laminate.

According to one aspect of the present invention, there is provided a laminate including a first substrate layer, an anchor coat layer, and an inorganic barrier layer in this order, in which the first substrate layer contains a polyolefin, and the anchor coat layer has a sectional composite elastic modulus in a range of 3.5 to 6.5GPa and a thickness in a range of 0.4 to 3.0 $\mu$m.

According to another aspect of the present invention, there is provided the laminate according to the aspect, in which the first substrate layer has a layer structure including a skin layer in contact with the anchor coat layer and a core layer, the anchor coat layer has a sectional hardness in a range of 200MPa or more and 350MPa or less, and the skin layer has a sectional hardness of 150MPa or less.

According to still another aspect of the present invention, there is provided the laminate according to the aspect, in which the skin layer has a sectional hardness of 20MPa or more.

According to still another aspect of the present invention, there is provided the laminate according to any one of the above aspects, in which a thickness of the skin layer is in a range of 0.2 to 1.8 $\mu$m.

According to still another aspect of the present invention, there is provided the laminate according to any one of the above aspects, in which the anchor coat layer is a cured film of an anchor coat agent containing a polyurethane resin and a curing agent, and a solid content mass ratio [curing agent/polyurethane resin] of the polyurethane resin and the curing agent in the anchor coat agent is in a range of 30/100 to 50/100.

According to still another aspect of the present invention, there is provided the laminate according to any one of the above aspects, in which the inorganic barrier layer contains silicon oxide or aluminum oxide.

According to still another aspect of the present invention, there is provided a packaging material including the laminate according to any one of the above aspects.

According to still another aspect of the present invention, there is provided a packaging material according to the above aspect, including a sealant layer formed on a surface of the laminate on the first substrate layer side with a first adhesive layer interposed therebetween, and a second substrate layer formed on a surface of the laminate on the inorganic barrier layer side with a second adhesive layer interposed therebetween.

According to still another aspect of the present invention, there is provided the packaging material for a retort pouch according to any one of the above aspects.

According to still another aspect of the present invention, there is provided a package including the packaging material according to any one of the above aspects.

According to still another aspect of the present invention, there is provided a packaged article including the package according to the above aspect and a content contained in the package.

According to the present invention, the laminate excellent in abuse resistance and adhesion, and the packaging material, the package, and the packaged article including the laminate are provided.

BRIEF DESCRIPTION OF THE DRAWINGS

FIG. 1 is a partial sectional view schematically illustrating an example of a laminate according to a first embodiment of the present invention.

FIG. 2 is a partial sectional view schematically illustrating the laminate according to a modification of the first embodiment.

FIG. 3 is a partial sectional view schematically illustrating an example of a packaging material according to a second embodiment of the present invention.

FIG. 4 is a partial sectional view schematically illustrating the packaging material according to a modification of the second embodiment.

FIG. 5 is a sectional view schematically illustrating one step in measurement of a composite elastic modulus and hardness.

FIG. 6 is a graph illustrating a load-displacement curve.

DETAILED DESCRIPTION

Hereinafter, embodiments of the present invention will be described with reference to the drawings. In the embodiments described below, any one of the above aspects is further embodied. Matters described below can be incorporated into each of the aspects alone or in combination of two or more thereof.

In addition, the following embodiments exemplify configurations for embodying a technical idea of the present invention, and the technical idea of the present invention is not limited by materials, shapes, structures, and the like of the following constituent members. Various modifications can be made to the technical idea of the present invention within the technical scope defined by the claims described in the claims.

Note that elements having the same or similar functions are denoted by the same reference numerals in the drawings to be referred to below, and redundant description will be omitted. In addition, the drawings are schematic, and a relationship between a dimension in a certain direction and a dimension in another direction, a relationship between a dimension of a certain member and a dimension of another member, and the like can be different from actual ones.

[First embodiment]

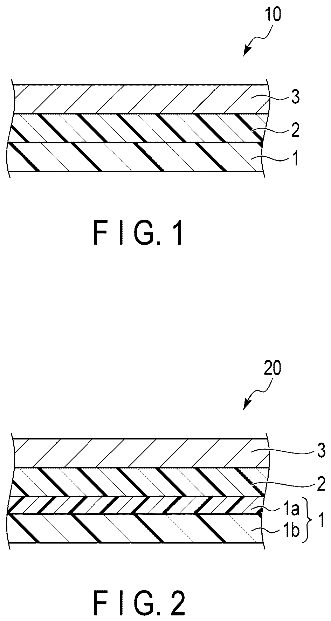

FIG. 1 is a partial sectional view schematically illustrating an example of a laminate according to a first embodiment of the present invention. A laminate 10 illustrated in FIG. 1 includes a first substrate layer 1, an anchor coat layer 2, and an inorganic barrier layer 3 in this order. Layers included in the laminate 10 will be described below.

(First substrate layer)

The first substrate layer 1 is a film to be one of supports, and may be a single layer or a laminated structure including two or more layers.

The first substrate layer 1 contains polyolefin. The first substrate layer 1 may be made of a polyolefin film.

Examples of the polyolefin film include a polyethylene film (PE), a polypropylene film (PP), and a polybutene film (PB). Further, the polyolefin film may be, for example, an acid-modified polyolefin film obtained by graft-modifying a polyolefin using an unsaturated carboxylic acid, an acid anhydride of an unsaturated carboxylic acid, an ester of an unsaturated carboxylic acid, or the like.

The polyolefin film constituting the first substrate layer 1 may be a stretched film or a non-stretched film. From the viewpoint of impact resistance, heat resistance, water resistance, dimensional stability, and the like, the polyolefin film may be the stretched film. Thus, the laminate 10 can be made more suitable for use in a high-temperature and high-pressure or high-temperature and high-humidity environment such as a retort treatment or a boil treatment. A stretching method is not particularly limited. The stretching method may be any method as long as a film having stable dimensions can be supplied, such as stretching by inflation, uniaxial stretching, or biaxial stretching.

A thickness of the first substrate layer 1 is not particularly limited, and can be appropriately set, for example, in a range of 6 to 200 $\mu$m according to applications. According to one example, the thickness of the first substrate layer 1 may be in a range of 9 to 50 $\mu$m or in a range of 12 to 38 $\mu$m from the viewpoint of obtaining excellent impact resistance and excellent gas barrier properties.

In the first substrate layer 1, a main surface on a side where the anchor coat layer 2 is formed may be subjected to various pretreatments such as a corona treatment, a plasma treatment, and a frame treatment as long as barrier performance is not impaired, or a coat layer such as an easily adhesive layer may be provided.

(Anchor coat layer)

The laminate 10 includes the anchor coat layer 2 between the first substrate layer 1 and the inorganic barrier layer 3. The anchor coat layer 2 has a sectional composite elastic modulus at room temperature (25°C) in a range of 3.5 to 6.5GPa and a thickness in a range of 0.4 to 3.0 $\mu$m. As described below, the anchor coat layer 2 imparts excellent abuse resistance and adhesion to the laminate 10. Here, the abuse resistance means a property capable of suppressing a decrease in at least one of oxygen barrier properties and water vapor barrier properties even when a Gelbo flex test (a test in which an operation of compressing a gas barrier film while applying a twist is repeated) is performed.

In the anchor coat layer 2, the fact that the sectional composite elastic modulus is 6.5GPa or less contributes to improving the abuse resistance of the laminate 10. When the composite elastic modulus is 6.5GPa or less, the anchor coat layer 2 is flexible, and cracking of the inorganic barrier layer 3 hardly occurs when physical stress such as bending is applied to the laminate 10. In this case, the thickness of the anchor coat layer 2 is in the range of 0.4 to 3.0 $\mu$m. When the thickness of the anchor coat layer 2 is excessively increased, the abuse resistance is deteriorated, and a desired abuse resistance cannot be obtained even when the sectional composite elastic modulus is 6.5GPa or less. When the thickness of the anchor coat layer 2 is excessively reduced, influence of shrinkage of the first substrate layer 1 is transmitted to the inorganic barrier layer 3 at the time of treatment such as retorting, and the gas barrier properties is deteriorated. Therefore, when the thickness of the anchor coat layer 2 is less than 0.4 $\mu$m, the gas barrier properties after treatment under the high-temperature and high-pressure or high-temperature and high-humidity environment such as the retort treatment is deteriorated, and desired gas barrier properties and abuse resistance cannot be obtained even when the sectional composite elastic modulus of the anchor coat layer 2 is 6.5GPa or less.

In the anchor coat layer 2, the fact that the sectional composite elastic modulus is 3.5GPa or more contributes to improving the adhesion of the laminate 10. By setting the composite elastic modulus to 3.5GPa or more, the adhesion of the laminate 10 is improved, and delamination between the anchor coat layer 2 and the inorganic barrier layer 3 hardly occurs even after the treatment under the high-temperature and high-pressure or high-temperature and high-humidity environment such as the retort treatment. In this case, the thickness of the anchor coat layer is 3.0 $\mu$m or less. When the thickness of the anchor coat layer 2 is excessively increased, the adhesion is deteriorated, and desired adhesion cannot be obtained even when the composite elastic modulus is 3.5GPa or more.

As described above, in the anchor coat layer 2, by setting the thickness to be in the range of 0.4 to 3.0 $\mu$m and setting the sectional composite elastic modulus to be in the range of 3.5 to 6.5GPa, excellent abuse resistance and adhesion are imparted to the laminate 10. As described above, since the laminate 10 including the anchor coat layer 2 is excellent in abuse resistance and adhesion, even when receiving the physical stress such as bending after the treatment under a severe environment such as the retort treatment, good gas barrier properties can be maintained and a high interlayer adhesive force can be maintained. Note that the composite elastic modulus is measured using a nanoindentation method, and will be described later with reference to the drawings.

The anchor coat layer 2 preferably has the sectional composite elastic modulus at room temperature (25°C) in a range of 4.0 to 6.0GPa. Further, the thickness of the anchor coat layer 2 is preferably in a range of 0.5 to 3.0 $\mu$m, and more preferably in a range of 0.7 to 2.0 $\mu$m. Note that the anchor coat layer 2 also functions as a planarization layer, and further improves the gas barrier properties of the laminate 10 by uniformly depositing the inorganic barrier layer 3 without defects.

The anchor coat layer 2 can be formed using an anchor coat agent. Examples of the anchor coat agent include a polyester-based polyurethane resin, a polyether-based polyurethane resin, and a water-dispersible polyurethane resin.

The anchor coat agent contains, for example, a polyurethane resin and a curing agent described below.

<Polyurethane resin>

The polyurethane resin may be a reaction product of a polyurethane resin having an acid group (hereinafter, also referred to as an "acid group-containing polyurethane resin") and a polyamine compound. That is, the polyurethane resin may be one obtained by bonding the acid group of the acid group-containing polyurethane and an amino group of the polyamine compound. The bond between the acid group of the acid group-containing polyurethane resin and the amino group of the polyamine compound may be an ionic bond (for example, an ionic bond between a carboxyl group and a tertiary amino group, and the like.) or a covalent bond (for example, an amide bond or the like).

Since the acid group-containing polyurethane constituting the polyurethane resin has the acid group, and thus has anionic and self-emulsifying properties, and is also referred to as anionic self-emulsifying polyurethane. The acid group of the acid group-containing polyurethane can be bonded to an amino group (a primary amino group, a secondary amino group, a tertiary amino group, or the like) of a polyamine constituting the polyurethane resin. Examples of the acid group include a carboxyl group and a sulfonic acid group. The acid group can be usually neutralized by a neutralizing agent (base), and may form a salt with the base. The acid group may be located at an end or at a side chain of the acid group-containing polyurethane, but is preferably located at least at the side chain.

An acid value of the acid group-containing polyurethane can be selected within a range in which the acid group-containing polyurethane has water dispersibility, and can be 5 to 100 mgKOH/g, may be 10 to 70 mgKOH/g, or 15 to 60 mgKOH/g. When the acid value of the acid group-containing polyurethane is equal to or more than a lower limit value of the above range, the water dispersibility of the acid group-containing polyurethane is easily obtained, and uniform dispersibility between the polyurethane resin and other materials and dispersion stability of the anchor coat agent are easily secured. When the acid value of the acid group-containing polyurethane is equal to or less than an upper limit value of the above range, the water resistance and the gas barrier properties of an underlayer are easily secured. The acid value of the acid group-containing polyurethane is measured by a method according to JIS K 0070.

A total of a urethane group concentration and a urea group concentration of the acid group-containing polyurethane can be 15 mass% or more and may be 20 to 60 mass% from the viewpoint of the gas barrier properties. When the total of the urethane group concentration and the urea group concentration is the above lower limit value or more, the gas barrier properties of the underlayer is easily improved. When the total of the urethane group concentration and the urea group concentration is equal to or less than an upper limit value of the above range, it is easy to suppress rigidity and brittleness of the underlayer.

The urethane group concentration means a ratio of a molecular weight (59 g/equivalent) of the urethane group to a molecular weight of a constituent unit of the polyurethane resin. The urea group concentration means a ratio of a molecular weight (primary amino group (amino group): 58 g/equivalent, secondary amino group (imino group): 57 g/equivalent) of the urea group to the molecular weight of the constituent unit of the polyurethane resin. Note that when a mixture of two or more kinds is used as the acid group-containing polyurethane, the urethane group concentration and the urea group concentration can be calculated based on charged reaction components, that is, use ratios of the components.

The acid group-containing polyurethane can have at least rigid units (units composed of a hydrocarbon ring) and short chain units (for example, units composed of a hydrocarbon chain). The constituent unit of the acid group-containing polyurethane may contain a hydrocarbon ring (at least one of aromatic and non-aromatic hydrocarbon rings) derived from a polyisocyanate component, a polyhydroxy acid component, a polyol component, or a chain extender component (in particular, at least the polyisocyanate component). From the viewpoint of improving the oxygen barrier properties, the polyurethane resin can contain an aromatic ring, and thus the constituent unit of the acid group-containing polyurethane may contain the aromatic hydrocarbon ring as the hydrocarbon ring.

A ratio of the units composed of the hydrocarbon ring in the constituent unit of the acid group-containing polyurethane can be 10 to 70 mass%, and may be 15 to 65 mass%, or 20 to 60 mass% with respect to a total of all the constituent units. When the ratio of the units composed of the hydrocarbon ring is equal to or more than a lower limit value of the above range, the gas barrier properties of the underlayer is easily improved. When the ratio of the units composed of the hydrocarbon ring is equal to or less than an upper limit value of the above range, it is easy to suppress the rigidity and the brittleness of the underlayer.

A number average molecular weight of the acid group-containing polyurethane can be appropriately selected, and can be 800 to 1000000, may be 800 to 200000, or 800 to 100000. When the number average molecular weight of the acid group-containing polyurethane is equal to or less than an upper limit value of the above range, an appropriate viscosity of the anchor coat agent is easily obtained. When the number average molecular weight of the acid group-containing polyurethane is equal to or more than a lower limit value of the above range, the gas barrier properties of the underlayer is easily improved. The number average molecular weight of the acid group-containing polyurethane is a value in terms of standard polystyrene measured by gel permeation chromatography (GPC).

The acid group-containing polyurethane may be crystalline in order to improve the gas barrier properties. A glass transition temperature of the acid group-containing polyurethane can be 100°C or higher, and may be 110°C or higher, or 120°C or higher. When the glass transition temperature of the acid group-containing polyurethane is 100°C or higher, the gas barrier properties of the underlayer is easily improved. The glass transition temperature of the acid group-containing polyurethane can be 200°C or lower, and may be 180°C or lower, or 150°C or lower. Therefore, the glass transition temperature of the acid group-containing polyurethane can be 100 to 200°C, and may be 110 to 180°C, or 120 to 150°C. The glass transition temperature of the acid group-containing polyurethane is measured by differential scanning calorimetry (DSC).

The polyamine constituting the polyurethane resin is a compound having two or more basic nitrogen atoms. The basic nitrogen atom is a nitrogen atom that can be bonded to the acid group of the acid group-containing polyurethane, and examples thereof include a nitrogen atom in the amino group such as the primary amino group, the secondary amino group, or the tertiary amino group. The polyamine is not particularly limited as long as it can be bonded to the acid group of the acid group-containing polyurethane and improve the gas barrier properties, and various compounds having two or more basic nitrogen atoms can be used. As the polyamine, a polyamine having two or more of at least one amino group selected from the group consisting of the primary amino group, the secondary amino group, and the tertiary amino group can be used.

Examples of the polyamine include alkylenediamines, polyalkylenepolyamines, and silicon compounds having a plurality of basic nitrogen atoms. Examples of the alkylenediamines include alkylenediamines having 2 to 10 carbon atoms such as ethylenediamine, 1,2-propylenediamine, 1,3-propylenediamine, 1,4-butanediamine, and 1,6-hexamethylenediamine. Examples of the polyalkylenepolyamines include tetraalkylene polyamines. Examples of the silicon compounds having a plurality of basic nitrogen atoms (including a nitrogen atom of an amino group or the like) include silane coupling agents having a plurality of basic nitrogen atoms such as 2- [N-(2-aminoethyl)amino]ethyltrimethoxysilane and 3-[N-(2-aminoethyl)amino]propyltriethoxysilane.

An amine value of the polyamine can be 100 to 1900 mgKOH/g, and may be 150 to 1900 mgKOH/g, 200 to 1900 mgKOH/g, 200 to 1700 mgKOH/g, or 300 to 1500 mgKOH/g. When the amine value of the polyamine is equal to or more than a lower limit value of the above range, the gas barrier properties of the underlayer is easily improved. When the amine value of the polyamine is equal to or less than an upper limit value of the above range, water dispersion stability of the polyurethane resin tends to be improved.

[Method for measuring amine value]

The amine value of the polyamine is measured by the following method.

0.5 to 2 g of a sample is precisely weighed (sample amount S g). 30 g of ethanol is added to and dissolved in the precisely weighed sample. Bromophenol blue as an indicator is added to the obtained solution, and the solution is titrated with 0.2 mol/L of an ethanolic hydrochloric acid solution (titer f). A point at which color of the solution changes from green to yellow is set as an end point, and the amine value is determined using the following calculation formula 1 using a titration amount (A mL) at this time.

$$\texttt{Calculation formula 1: Amine value =}$$
$$\texttt{A} \times \texttt{f} \times \texttt{0.2} \times \texttt{56.108/S [mgKOH/g]}$$

In forming the polyurethane resin, a molar ratio (acid group/basic nitrogen atom) of the acid group of the acid group-containing polyurethane to the basic nitrogen atom of the polyamine can be 10/1 to 0.1/1, and may be 5/1 to 0.2/1. When the acid group/basic nitrogen atom is within the above range, excellent oxygen barrier properties are easily exhibited in the underlayer.

The polyurethane resin can be obtained in a state of being dispersed in an aqueous medium (in a form of an aqueous dispersion). That is, the polyurethane resin can be referred to as an aqueous polyurethane resin. Examples of the aqueous medium include water, water-soluble or hydrophilic organic solvents, and mixtures thereof. Examples of the water-soluble or hydrophilic organic solvents include: alcohols such as methanol, ethanol, and isopropanol; ketones such as acetone and methyl ethyl ketone; ethers such as tetrahydrofuran; cellosolves; carbitols; and nitriles such as acetonitrile. The aqueous medium may be water or a medium containing water as a main component. The content of water in the aqueous medium can be 70 mass% or more, and may be 80 mass% or more. The aqueous medium may or may not contain a neutralizing agent (base) that neutralizes the acid group of the acid group-containing polyurethane.

In the aqueous dispersion of the polyurethane resin, an average particle diameter of dispersed particles (polyurethane resin particles) is not particularly limited, and can be 20 to 500 nm, may be 25 to 300 nm, or 30 to 200 nm. When the average particle diameter of the dispersed particles is equal to or less than an upper limit value of the above range, uniform dispersibility between the dispersed particles and other materials and dispersion stability of the anchor coat agent are easily secured, and the gas barrier properties of the underlayer formed from the anchor coat agent is easily improved. The average particle diameter can be measured by diluting with water so that the solid content concentration is 0.03 to 0.3 mass%, and measuring with a concentrated system particle diameter analyzer (FPAR-10 manufactured by Otsuka Electronics Co., Ltd.).

As the polyurethane resin, a commercially available polyurethane resin may be used, or a polyurethane resin produced by a known production method may be used. Examples of the aqueous dispersion of the polyurethane resin formed from the acid group-containing polyurethane and the polyamine as described above include TAKELAC (registered trademark) WPB-341A (manufactured by Mitsui Chemicals, Inc.).

The method for producing the polyurethane resin is not particularly limited, and examples thereof include an ordinary aqueous conversion technique of the polyurethane resin, such as an acetone method and a prepolymer method. In a urethanization reaction, a urethanization catalyst such as an amine-based catalyst, a tin-based catalyst, or a lead-based catalyst may be used as necessary. For example, the acid group-containing polyurethane can be prepared by reacting a polyisocyanate compound, a polyhydroxy acid, and, if necessary, at least one of a polyol component and a chain extender component in an inert organic solvent such as ketones such as acetone, ethers such as tetrahydrofuran, and nitriles such as acetonitrile. More specifically, the aqueous dispersion of the acid group-containing polyurethane can be prepared by reacting the polyisocyanate compound, the polyhydroxy acid, and the polyol component in the inert organic solvent (in particular, the hydrophilic or water-soluble organic solvent) to produce a prepolymer having an isocyanate group at its terminal, neutralizing the prepolymer with the neutralizing agent to dissolve or disperse the prepolymer in the aqueous medium, and then adding and reacting the chain extender component to remove the organic solvent. The polyurethane resin in the form of the aqueous dispersion can be prepared by adding the polyamine to the aqueous dispersion of the acid group-containing polyurethane thus obtained and heating it as necessary. In the case of heating, the heating temperature can be 30 to 60°C.

<Curing agent>

The curing agent has reactivity with the polyurethane resin described above. The curing agent is not particularly limited as long as it has reactivity with the polyurethane resin in the anchor coat agent, but an isocyanate compound, a silane coupling agent, or an epoxy compound is preferable. Among them, the isocyanate compound is preferable from the viewpoint of adhesion to the first substrate layer 1.

The isocyanate compound can be used without any particular limitation as long as it is a compound having an isocyanate group (-NCO). The isocyanate group reacts with a hydroxyl group or the like of the polyurethane resin to form a strong bond. Therefore, when the anchor coat agent contains the isocyanate compound, it is possible to increase a film cohesive strength, improve the adhesion to the first substrate layer 1 and the inorganic barrier layer 3, and increase a practical strength as the packaging material.

As the isocyanate compound, a polyisocyanate compound having at least two isocyanate groups in the molecule is preferable, and examples thereof include organic polyisocyanate compounds such as phenylene diisocyanate, tolylene diisocyanate, diphenylmethane diisocyanate, xylylene diisocyanate, naphthylene diisocyanate, isophorone diisocyanate, hexamethylene diisocyanate, hydrogenated diphenylmethane diisocyanate, polymethylene polyphenyl polyisocyanate, hydrogenated toluene diisocyanate, and tetramethylene xylylene diisocyanate, and derivatives of these organic polyisocyanate compounds.

As the isocyanate compound, an isocyanate compound having dispersibility in water (water-dispersible isocyanate compound) is preferable. Examples of the water-dispersible isocyanate compound include (1) an isocyanate compound obtained by modifying some of the isocyanate groups of the organic polyisocyanate compound with a hydrophilic group such as polyethylene oxide, a carboxy group, or a sulfonic acid group to form a self-emulsifying type, (2) an isocyanate compound obtained by forcibly emulsifying the organic polyisocyanate compound with a surfactant or the like to make the organic polyisocyanate compound dispersible in water, (3) various prepolymers derived from the organic polyisocyanate compound, and (4) a compound obtained by blocking some of the isocyanate groups of the organic polyisocyanate with a blocking agent such as alcohols, phenols, oximes, mercaptans, amides, imides, or lactams, so-called blocked polyisocyanate compounds.

These isocyanate compounds may be used alone or in combination of two or more kinds thereof.

As the isocyanate compound as described above, a commercially available isocyanate compound may be used, or an isocyanate compound produced by a known production method may be used. Examples of a commercially available product include water-dispersible TAKENATE (registered trademark) WD-725 (manufactured by Mitsui Chemicals, Inc.), which is a water-dispersible type of hexamethylene diisocyanate-modified product.

The sectional composite elastic modulus in the anchor coat layer 2 can be adjusted by, for example, a solid content mass ratio between the polyurethane resin and the curing agent contained in the anchor coat agent. The solid content mass ratio [curing agent/polyurethane resin] of the curing agent to the urethane resin in the anchor coat agent is preferably in a range of 30/100 to 50/100, and more preferably in a range of 35/100 to 40/100.

The anchor coat agent may contain known additives such as an antioxidant, a weathering agent, a heat stabilizer, a lubricant, a crystal nucleating agent, an ultraviolet absorber, a plasticizer, an antistatic agent, a colorant, a filler, and a surfactant as long as the gas barrier properties, the abuse resistance, and the adhesion are not impaired.

As a method for applying the anchor coat layer 2 onto the first substrate layer 1, a known coating method can be used. Examples of the known coating method include a method using a spray, a coater, a printing machine, a brush, or the like, and an immersion method (a dipping method). Examples of the coater and the printing machine used in these methods, and coating methods thereof include a gravure coater, a reverse roll coater, a micro gravure coater, a chamber doctor combination coater, an air knife coater, a dip coater, a bar coater, a comma coater, and a die coater for a direct gravure method, a reverse gravure method, a kiss reverse gravure method, an offset gravure method, and the like.

(Inorganic barrier layer)

The inorganic barrier layer 3 has the gas barrier properties such as the oxygen barrier properties and the water vapor barrier properties. The inorganic barrier layer 3 preferably contains an inorganic oxide. By using the inorganic oxide layer as the inorganic barrier layer 3, high barrier properties can be obtained with a very thin layer in a range that does not affect recyclability of the laminate 10. Examples of the inorganic oxide contained in the inorganic barrier layer 3 include aluminum oxide, silicon oxide, magnesium oxide, and tin oxide. From the viewpoint of transparency and barrier properties, the inorganic oxide is preferably any of aluminum oxide, silicon oxide, and magnesium oxide. From the viewpoint of excellent tensile stretchability during processing, silicon oxide is preferably contained as the inorganic oxide.

An O/Si ratio (mass ratio) of the inorganic barrier layer 3 is desirably 1.7 or more. By reducing a content ratio of metal Si by setting the O/Si ratio to 1.7 or more, good transparency is easily obtained. The O/Si ratio (mass ratio) of the inorganic barrier layer 3 is preferably 2.0 or less. When the O/Si ratio is 2.0 or less, crystallinity of SiO increases. When the crystallinity of SiO increases, the inorganic barrier layer 3 can be prevented from being too hard, and good tensile resistance can be obtained. This makes it possible to suppress generation of a crack in the inorganic barrier layer 3 when a second substrate layer 14 to be described later is formed on the inorganic barrier layer 3. In addition, when the package is subjected to the retort treatment or the boil treatment, the polyolefin film constituting the package may shrink due to heat, but when the inorganic barrier layer 3 has an O/Si ratio of 2.0 or less and has good tensile resistance, the shrinkage can be followed, and deterioration of the gas barrier properties can be suppressed. From the viewpoint of more sufficiently obtaining these effects, the O/Si ratio of the inorganic barrier layer 3 is more preferably 1.75 or more and 1.9 or less, and still more preferably 1.8 or more and 1.85 or less.

The O/Si ratio of the inorganic barrier layer can be determined by X-ray photoelectron spectroscopy (XPS). As measurement conditions, for example, measurement can be performed using an X-ray photoelectron spectrometer (manufactured by JEOL Ltd., trade name: JPS-90MXV) as a measurement apparatus, using non-monochromatic MgK$\alpha$ (1253.6 eV) as an X-ray source, and at an X-ray output of 100 W (10 kV-10 mA). For quantitative analysis for determining the O/Si ratio, relative sensitivity factors of 2.28 for O1s and 0.9 for Si2p can be used.

A film thickness of the inorganic barrier layer 3 is preferably 10 nm or more and 80 nm or less, and more preferably in a range of 15 nm to 60 nm. When the film thickness is the above lower limit value or more, sufficient barrier performance can be obtained. In addition, when the film thickness is equal to or less than the upper limit value, it is possible to suppress the generation of the crack due to deformation of a thin film due to internal stress and to suppress deterioration of the barrier performance. Note that when the film thickness exceeds the above upper limit value, the crack is likely to occur due to the deformation due to the internal stress, and the abuse resistance is also deteriorated. In addition, when the film thickness exceeds the above upper limit value, the cost tends to increase due to an increase in amount of materials used, an increase in film formation time, and the like, which is not preferable from an economic point of view, either.

The inorganic barrier layer 3 can be formed by, for example, vacuum film formation. In the vacuum film formation, a physical vapor deposition method or a chemical vapor deposition method can be used. Examples of the physical vapor deposition method include a vacuum deposition method, a sputtering method, and an ion plating method, but are not limited thereto. Examples of the chemical vapor deposition method include a thermal CVD method, a plasma CVD method, and a photo CVD method, but are not limited thereto.

In the vacuum film formation, a resistance heating type vacuum deposition method, an electron beam (EB) heating type vacuum deposition method, an induction heating type vacuum deposition method, a sputtering method, a reactive sputtering method, a dual magnetron sputtering method, a plasma chemical vapor deposition method (PECVD method), and the like are particularly preferably used. However, in consideration of productivity, the vacuum deposition method is most excellent at the present time. As a heating means of the vacuum deposition method, it is preferable to use any one of an electron beam heating method, a resistance heating method, and an induction heating method.

(Printed layer)

The laminate 10 may further include a printed layer (not illustrated). The printed layer is provided at a position visible from an outside of the laminate 10 for the purpose of displaying information on a content, identifying the content, or improving designability of the package. For example, the printed layer may be interposed between the first substrate layer 1 and the anchor coat layer 2. The printing method and the printing ink are not particularly limited, and are appropriately selected from known printing methods and printing inks in consideration of printability to the film, designability such as color tone, adhesion, safety as a food container, and the like. As the printing method, for example, a gravure printing method, an offset printing method, a gravure offset printing method, a flexographic printing method, an inkjet printing method, or the like can be used. Among them, the gravure printing method can be preferably used from the viewpoint of productivity and high definition of a pattern.

In order to enhance adhesion of the printed layer, various pretreatments such as the corona treatment, the plasma treatment, and the frame treatment may be performed on a surface of the first substrate layer 1 on the anchor coat layer 2 side, or the coat layer such as the easily adhesive layer may be provided.

(Method for measuring composite elastic modulus)

The composite elastic modulus described above is obtained by the nanoindentation method. Hereinafter, a method for measuring the composite elastic modulus will be described. Here, as an example, it is assumed that an object to be measured is the anchor coat layer 2 of the laminate 10.

First, a measurement sample (test piece) is obtained from the laminate 10 by the same method as a method for preparing the measurement sample described in the following Examples.

Subsequently, the obtained test piece is placed on a nanoindenter. Here, the test piece is placed on the nanoindenter such that an indenter included in the nanoindenter is in contact perpendicularly to the section of the anchor coat layer 2.

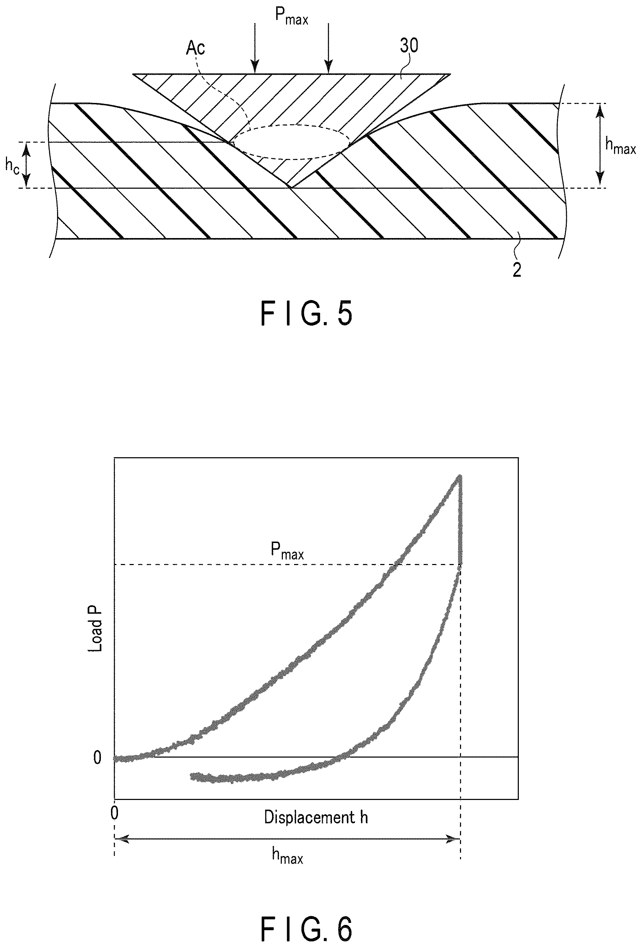

Subsequently, as illustrated in FIG. 5, an indenter 30 is pushed into the anchor coat layer 2. An indentation speed is set to 50 nm/sec. FIG. 5 is a sectional view schematically illustrating a state in which the indenter 30 is pushed into the anchor coat layer 2 at a maximum depth. In FIG. 5, $h_{max}$ represents a maximum depth of indentation into the anchor coat layer 2, that is, a maximum displacement. $A_c$ represents a contact projected area. $h_c$ represents a contact depth. In a process of pushing the indenter 30, a load applied to the anchor coat layer 2 and an indentation depth are measured by the nanoindenter. A retention time at the maximum depth is 1 second.

As the indenter 30, a Berkovich type diamond indenter manufactured by Bruker Japan K.K. is used. The Berkovich type diamond indenter has a three-sided pyramidal structure, the indenter has an internal angle of 142.35°, an angle formed by a center line and a surface is 65.35°, and the indenter has an aspect ratio of 1:8.

Subsequently, the indenter 30 is pulled out from the anchor coat layer 2. A pulling-out speed is 50 nm/sec. Also in this process, the load applied to the anchor coat layer 2 and the indentation depth are measured by the nanoindenter. In FIG. 5, $P_{max}$ represents a maximum load of an unloading curve.

According to the above-described operation, for example, a relationship illustrated in FIG. 6 is obtained. FIG. 6 is a graph illustrating a load-displacement curve. In FIG. 6, a vertical axis represents a load P applied to the anchor coat layer 2, and a horizontal axis represents the indentation depth of the indenter 30, that is, a displacement h. In FIG. 6, when the load P is 0, the indenter 30 is not in contact with the anchor coat layer 2. A position where the displacement h is 0 is a position of a starting point where the load P applied to the anchor coat layer 2 increases from 0. In FIG. 6, a curve in which the load P increases from 0 with an upward increase in the displacement h indicates a relationship between the load P and the displacement h in the process of pushing the indenter 30 into the anchor coat layer 2. A curve in which the load P decreases downward to a negative value as the displacement h decreases is the unloading curve. The unloading curve indicates the relationship between the load and the displacement in a process of pulling out the indenter 30 from the anchor coat layer 2.

Subsequently, the contact depth $h_c$ is obtained by analysis using the Oliver-Pharr method. The contact depth $h_c$ can be calculated by the following formula (1).

$$h_c = h_{max} - \varepsilon \frac{P_{max}}{S} \cdots (1)$$

Here, $\varepsilon$ is a constant related to an indenter shape. In a Berkovich indenter, this constant is 0.75. The maximum load $P_{max}$ and the maximum displacement $h_{max}$ of the unloading curve can be obtained based on the graph illustrated in FIG. 6. S is contact stiffness. The contact stiffness S is a slope of an approximate curve immediately after pulling out, obtained by fitting a range of 20 to 95% with respect to the maximum load in the unloading curve in FIG. 6 by a function of the following formula (2). where P is the load and h is the indentation depth. In addition, A, $h_f$, and m are fitting parameters at the time of fitting.

$$P = A\left(h - h_f\right)^m \cdots (2)$$

Subsequently, the contact projection area $A_c$ is obtained based on the indenter shape and the contact depth $h_c$. The contact projection area $A_c$ can be expressed by a function of the contact depth $h_c$ as expressed in the following formula (3).

$$A_c = 24.5 \times h_c^2 + C_1 h_c + C_2 h_c^{1/2} + C_3 h_c^{1/4} + C_4 h_c^{1/8} + C_5 h_c^{1/16} \cdots (3)$$

Note that the formula (3) includes terms including $C_1$ to $C_5$ called correction terms in order to correct an influence of the indenter shape. $C_1$ to $C_5$ are values determined such that a maximum load of 20 $\mu$N to 10 mN is measured using fused quartz as the test piece, and a composite elastic modulus Er at each maximum load is 69.6GPa, which is the composite elastic modulus of the fused quartz.

Subsequently, the composite elastic modulus Er is obtained based on the contact projection area Ac and the contact stiffness S. The composite elastic modulus Er can be obtained by the following formula (4).

$$Er = \frac{S\sqrt{\pi}}{2\sqrt{A_c}} \cdots (4)$$

The composite elastic modulus Er is measured at a plurality of locations, for example, 20 locations, for one test piece. An average value of these composite elastic moduli Er is obtained as the composite elastic modulus.

[Modification]

The laminate can be variously deformed. For example, as described below, in the laminate, the first substrate layer 1 may have the laminated structure for the laminate 10 illustrated in FIG. 1. In this case, the laminated structure preferably includes a skin layer in contact with the anchor coat layer 2 and a core layer. Hereinafter, a modification will be described with reference to FIG. 2. Note that matters described with reference to FIG. 1 can be applied to the laminate according to the modification described here alone or in combination of the plurality of matters.

FIG. 2 is a partial sectional view schematically illustrating the laminate according to the modification of the first embodiment.

A laminate 20 illustrated in FIG. 2 is the same as the laminate 10 described with reference to FIG. 1 except that the first substrate layer 1 has a laminated structure including a skin layer 1a in contact with the anchor coat layer 2 and a core layer 1b. As described above, the matters described for the laminate 10 are also applied to the anchor coat layer 2, but due to a specific structure of the laminate 20 in which the skin layer 1a described below is in contact with the anchor coat layer 2, the anchor coat layer 2 preferably has a sectional hardness in a range of 200MPa or more and 350MPa or less as described later.

(First substrate layer)

The first substrate layer 1 is the film to be one of the supports and contains a polyolefin. The first substrate layer 1 has the laminated structure including the skin layer 1a and the core layer 1b.

<Skin layer 1a>

The skin layer 1a included in the first substrate layer 1 is interposed between the core layer 1b which is another layer included in the first substrate layer 1 and the anchor coat layer 2, and is in contact with the anchor coat layer 2. The skin layer 1a improves adhesion between the first substrate layer 1 and the anchor coat layer 2, and makes delamination between the first substrate layer 1 and the anchor coat layer 2 less likely to occur even after the retort treatment.

The skin layer 1a preferably contains the polyolefin, and may be made of the polyolefin film. A resin constituting the polyolefin film may be, for example, a homopolymer of $\alpha$-olefin represented by polyethylene, polypropylene, polybutene, or the like, or a copolymer of two or more kinds of $\alpha$-olefin. The copolymer may be a random copolymer or a block copolymer. As the resin constituting the polyolefin film, one of the homopolymer of $\alpha$-olefin or the copolymer of two or more kinds of $\alpha$-olefins may be used alone, or two or more thereof may be used in combination.

In one embodiment, the resin constituting the polyolefin film is preferably a copolymer of propylene and another $\alpha$-olefin. Examples of other $\alpha$-olefins include $\alpha$-olefins having 2 to 6 carbon atoms other than propylene, such as ethylene, 1-butene, and 1-hexene. The content of other α-olefin comonomer components contained in the copolymer is, for example, preferably in a range of 0.5 to 15 mol%, and more preferably in a range of 0.6 to 11 mol%.

Examples of such a propylene-based copolymer include an ethylene-propylene random copolymer, a 1-butene-propylene random copolymer, an ethylene-1-butene-propylene random copolymer, and an ethylene-propylene block copolymer.

The polyolefin film constituting the skin layer 1a may be the stretched film or the non-stretched film. From the viewpoint of impact resistance, heat resistance, water resistance, dimensional stability, and the like, the polyolefin film may be the stretched film. Thus, the laminate 20 can be made more suitable for use in the high-temperature and high-pressure or high-temperature and high-humidity environment such as the retort treatment or the boil treatment. A stretching method is not particularly limited. The stretching method may be any method as long as a film having stable dimensions can be supplied, such as stretching by inflation, uniaxial stretching, or biaxial stretching. The first substrate layer 1 including the skin layer 1a and the core layer 1b is obtained, for example, by co-extruding a resin for forming the skin layer 1a and a resin for forming the core layer 1b, and then biaxially stretching them.

The skin layer 1a has a sectional hardness of 150MPa or less at room temperature (25°C). In the skin layer 1a, the fact that the sectional hardness is 150MPa or less contributes to improving the abuse resistance of the laminate 20. Here, the anchor coat layer 2 adjacent to the skin layer 1a preferably has an upper limit value of sectional hardness of 350MPa or less as described later. By setting the sectional hardness of the skin layer 1a to 150MPa or less and setting the sectional hardness of the anchor coat layer 2 to 350MPa or less, flexibility can be generated in a layer under the inorganic barrier layer 3. Thus, when the physical stress such as bending is applied to the laminate 20, the cracking of the inorganic barrier layer 3 hardly occurs. This effect is hardly obtained by adjusting the upper limit value of the sectional hardness of only one of the skin layer 1a and the anchor coat layer 2. In the skin layer 1a, the sectional hardness is more preferably 120MPa or less.

While the sectional hardness of the skin layer 1a is 150MPa or less, the sectional hardness of the anchor coat layer 2 is preferably in the range of 200MPa or more and 350MPa or less. In this case, the sectional hardness of the skin layer 1a is significantly lower than that of the anchor coat layer 2. As described above, the sectional hardness of the skin layer 1a is preferably lower than the sectional hardness of the anchor coat layer in order to suppress the deterioration of the gas barrier properties after the retort treatment. That is, by making the sectional hardness of the skin layer 1a lower than the sectional hardness of the anchor coat layer 2, the shrinkage of the first substrate layer 1 during the retort treatment is less likely to be transmitted to the inorganic barrier layer 3. Therefore, the cracking of the inorganic barrier layer 3 hardly occurs, and the deterioration of the gas barrier properties after the retort treatment is suppressed. When the sectional hardness of the skin layer 1a is H1 and the sectional hardness of the anchor coat layer 2 is H2, a difference in the sectional hardness (H2-H1) between the anchor coat layer 2 and the skin layer 1a is preferably 50MPa or more, and more preferably 100MPa or more. On the other hand, an upper limit value of the difference in the sectional hardness (H2-H1) between the skin layer 1a and the anchor coat layer 2 is not particularly limited, and may be, for example, 330MPa or less or 200MPa or less.

In the skin layer 1a, the sectional hardness at room temperature (25°C) is preferably 20MPa or more. In this case, an effect of improving the adhesion between the anchor coat layer 2 and the skin layer 1a is further enhanced, and the delamination between the anchor coat layer 2 and the first substrate layer 1 is made less likely to occur. In the skin layer 1a, the sectional hardness is more preferably 40MPa or more.

Note that the sectional hardness is measured using the nanoindentation method, and will be described later with reference to the drawings.

A thickness of the skin layer 1a is preferably in a range of 0.2 to 1.8 μm. When the thickness of skin layer 1a is excessively increased, the heat resistance is deteriorated, and the barrier performance after the retort treatment is deteriorated. In addition, when the thickness of the skin layer 1a is excessively reduced, adhesion to the anchor coat layer is deteriorated. The thickness of the skin layer 1a is more preferably in a range of 0.6 to 1.4 μm.

In the skin layer 1a, a main surface on the side where the anchor coat layer 2 is formed may be subjected to the various pretreatments such as the corona treatment, the plasma treatment, and the frame treatment as long as the barrier performance is not impaired.

<Core layer 1b>

The core layer 1b contains polyolefin. The core layer 1b may be made of a polyolefin film. Examples of the polyolefin film include the polyethylene film, the polypropylene film, and the polybutene film. Further, the polyolefin film may be, for example, an acid-modified polyolefin film obtained by graft-modifying a polyolefin using an unsaturated carboxylic acid, an acid anhydride of an unsaturated carboxylic acid, an ester of an unsaturated carboxylic acid, or the like.

The polyolefin film constituting the core layer 1b may be the stretched film or the non-stretched film. From the viewpoint of impact resistance, heat resistance, water resistance, dimensional stability, and the like, the polyolefin film may be the stretched film. Thus, the laminate 20 can be made more suitable for use in the high-temperature and high-pressure or high-temperature and high-humidity environment such as the retort treatment or the boil treatment. A stretching method is not particularly limited. The stretching method may be any method as long as a film having stable dimensions can be supplied, such as stretching by inflation, uniaxial stretching, or biaxial stretching. As described above, the first substrate layer 1 including the skin layer 1a and the core layer 1b is obtained, for example, by co-extruding the resin for forming the skin layer 1a and the resin for forming the core layer 1b, and then biaxially stretching them.

A thickness of the core layer 1b is not particularly limited. For example, the thickness of the first substrate layer 1 including the skin layer 1a can be appropriately set in the range of 6 to 200 $\mu$m according to the applications. According to one example, the thickness of the first substrate layer 1 may be in a range of 9 to 50 $\mu$m or in a range of 12 to 38 $\mu$m from the viewpoint of obtaining excellent impact resistance and excellent gas barrier properties.

(Anchor coat layer)

The laminate 20 includes the anchor coat layer 2 between the first substrate layer 1 and the inorganic barrier layer 3. As described above, the anchor coat layer 2 has the sectional composite elastic modulus at room temperature (25°C) in the range of 3.5 to 6.5GPa and a thickness in the range of 0.4 to 3.0 $\mu$m. The anchor coat layer 2 preferably has the sectional hardness at room temperature (25°C) in the range of 200MPa or more and 350MPa or less. As described below, the anchor coat layer 2 imparts excellent abuse resistance and adhesion to the laminate 20.

In the anchor coat layer 2, the fact that the sectional hardness is 350MPa or less contributes to improving the abuse resistance of the laminate 20. When the sectional hardness is 350MPa or less, the anchor coat layer 2 is flexible, and the cracking of the inorganic barrier layer 3 hardly occurs when the physical stress such as bending is applied to the laminate 20. However, as described above, this effect is easily obtained when the sectional hardness of the anchor coat layer 2 is 350MPa or less and the sectional hardness of the skin layer 1a is 150MPa or less, and it is difficult to obtain this effect by adjusting the upper limit value of the sectional hardness of only one of the anchor coat layer 2 and the skin layer 1a. In the anchor coat layer 2, the sectional hardness is more preferably 300MPa or less.

In the anchor coat layer 2, the fact that the sectional hardness is 200MPa or more contributes to improving the adhesion of the laminate 20. By setting the sectional hardness to 200MPa or more, the adhesion of the laminate 10 is improved, and the delamination between the anchor coat layer 2 and the inorganic barrier layer 3 hardly occurs even after the treatment under the high-temperature and high-pressure or high-temperature and high-humidity environment such as the retort treatment. In the anchor coat layer 2, the sectional hardness is more preferably 250MPa or more.

As described above, when the sectional hardness of the anchor coat layer 2 is 200MPa or more and 350MPa or less, and the sectional hardness of the skin layer 1a which is a layer constituting the first substrate layer and adjacent to the anchor coat layer is 150MPa or less, excellent gas barrier properties, abuse resistance, and adhesion are imparted to the laminate 20. As described above, the laminate 20 according to the present modification can maintain good gas barrier properties even when receiving the physical stress such as bending, in addition to having excellent gas barrier properties after the treatment under the high-temperature and high-pressure or high-temperature and high-humidity environment such as the retort treatment or the boil treatment. In addition, the laminate 20 according to the present modification can maintain a high interlayer adhesive force after the treatment under the high-temperature and high-pressure or high-temperature and high-humidity environment such as the retort treatment or the boil treatment. Note that the sectional hardness is measured using the nanoindentation method as described above, and will be described later with reference to the drawings.

As the anchor coat agent used for forming the anchor coat layer 2, the same material as the anchor coat agent described in the laminate 10 can be used. When the anchor coat agent contains the above-mentioned polyurethane resin and curing agent, the above-mentioned sectional hardness of the anchor coat layer 2 can be adjusted by, for example, the solid content mass ratio between the polyurethane resin and the curing agent contained in the anchor coat agent. The solid content mass ratio [curing agent/polyurethane resin] of the curing agent to the urethane resin in the anchor coat agent is preferably in the range of 30/100 to 50/100, and more preferably in the range of 35/100 to 40/100.

As the method for applying the anchor coat layer 2 onto the first substrate layer 1, the known coating method can be used, and for example, the same method as the method for applying the anchor coat agent described in the laminate 10 can be used.

(Method of measuring hardness)

The sectional hardness described above is obtained by the nanoindentation method. Hereinafter, a method for measuring the hardness will be described. Here, as an example, it is assumed that an object to be measured is the anchor coat layer 2 of the laminate 10.

First, a measurement sample (test piece) is obtained from the laminate 10 by the same method as a method for preparing the measurement sample described in the following Examples.

Subsequently, the obtained test piece is placed on a nanoindenter. Here, the test piece is placed on the nanoindenter such that an indenter included in the nanoindenter is in contact perpendicularly to the section of the anchor coat layer 2. As the nanoindenter, one capable of surface detection at 1 μN is used. At the time of placement, trimming of an embedded resin may be performed as necessary.

Subsequently, as illustrated in FIG. 5, an indenter 30 is pushed into the anchor coat layer 2. The indentation speed is set to 30 nm/sec. FIG. 5 is a sectional view schematically illustrating a state in which the indenter 30 is pushed into the anchor coat layer 2 at a maximum depth. In FIG. 5, $h_{max}$ represents a maximum depth of indentation into the anchor coat layer 2, that is, a maximum displacement. $A_c$ represents a contact projected area. $h_c$ represents a contact depth. In a process of pushing the indenter 30, a load applied to the anchor coat layer 2 and an indentation depth are measured by the nanoindenter. A retention time at the maximum depth is 1 second.

Hysitron TI-Premier (trade name) manufactured by Bruker Japan K.K. is used as a measuring apparatus, and a Berkovich type diamond indenter manufactured by Bruker Japan K.K. is used as the indenter 30. The Berkovich type diamond indenter has a three-sided pyramidal structure, the indenter has an internal angle of 142.35°, an angle formed by a center line and a surface is 65.35°, and the indenter has an aspect ratio of 1:8.

Subsequently, the indenter 30 is pulled out from the anchor coat layer 2. The pulling-out speed is 30 nm/sec. Also in this process, the load applied to the anchor coat layer 2 and the indentation depth are measured by the nanoindenter. In FIG. 5, $P_{max}$ represents a maximum load of an unloading curve.

According to the above-described operation, for example, a relationship illustrated in FIG. 6 is obtained. FIG. 6 is a graph illustrating a load-displacement curve. In FIG. 6, a vertical axis represents a load P applied to the anchor coat layer 2, and a horizontal axis represents the indentation depth of the indenter 30, that is, a displacement h. In FIG. 6, when the load P is 0, the indenter 30 is not in contact with the anchor coat layer 2. A position where the displacement h is 0 is a position of a starting point where the load P applied to the anchor coat layer 2 increases from 0. In FIG. 6, a curve in which the load P increases from 0 with an upward increase in the displacement h indicates a relationship between the load P and the displacement h in the process of pushing the indenter 30 into the anchor coat layer 2. A curve in which the load P decreases downward to a negative value as the displacement h decreases is the unloading curve. The unloading curve indicates the relationship between the load and the displacement in a process of pulling out the indenter 30 from the anchor coat layer 2.

Subsequently, the contact depth $h_c$ is obtained by analysis using the Oliver-Pharr method. The contact depth $h_c$ can be calculated by the following formula (1).

$$h_c = h_{max} - \varepsilon \frac{P_{max}}{S} \cdots (1)$$

Here, $\varepsilon$ is a constant related to an indenter shape. In a Berkovich indenter, this constant is 0.75. The maximum load $P_{max}$ and the maximum displacement $h_{max}$ of the unloading curve can be obtained based on the graph illustrated in FIG. 6. S is contact stiffness. The contact stiffness S is a slope of an approximate curve immediately after pulling out, obtained by fitting a range of 20 to 95% with respect to the maximum load in the unloading curve in FIG. 6 by a function of the following formula (2). where P is the load and h is the indentation depth. In addition, A, $h_f$, and m are fitting parameters at the time of fitting.

$$P = A(h - h_f)^m \cdots (2)$$

Subsequently, the contact projection area $A_c$ is obtained based on the indenter shape and the contact depth $h_c$. The contact projection area $A_c$ can be expressed by a function of the contact depth $h_c$ as expressed in the following formula (3).

$$A_c = 24.5 \times h_c^2 + C_1 h_c + C_2 h_c^{1/2} + C_3 h_c^{1/4} + C_4 h_c^{1/8} + C_5 h_c^{1/16} \cdots (3)$$

Note that the formula (3) includes terms including $C_1$ to $C_5$ called correction terms in order to correct an influence of the indenter shape. $C_1$ to $C_5$ are values determined such that a maximum load of 20 μN to 10 mN is measured using fused quartz as the test piece, and a composite elastic modulus Er at each maximum load is 69.6 GPa, which is the composite elastic modulus of the fused quartz. The composite elastic modulus Er can be obtained by the following formula (4).

$$Er = \frac{S\sqrt{\pi}}{2\sqrt{A_c}} \cdots (4)$$

Subsequently, the hardness H is obtained based on the contact projection area $A_c$ and the maximum load $P_{max}$ of the unloading curve. The hardness H can be obtained by the following formula (5).

$$H = \frac{P_{max}}{A_c} \cdots (5)$$

The hardness H is measured at a plurality of locations, for example, 10 to 20 locations, for one test piece. An average value of the hardness H is obtained as the hardness.

[Second embodiment]

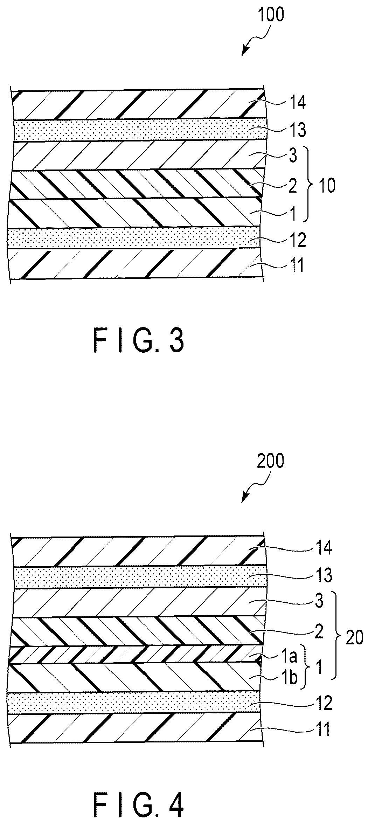

FIG. 3 is a partial sectional view schematically illustrating an example of the packaging material according to a second embodiment of the present invention. A packaging material 100 illustrated in FIG. 3 includes the laminate 10 according to the first embodiment described above, and includes a sealant layer 11, a first adhesive layer 12, the first substrate layer 1, the anchor coat layer 2, the inorganic barrier layer 3, a second adhesive layer 13, and the second substrate layer 14 in this order.

FIG. 4 is a partial sectional view schematically illustrating the packaging material according to a modification of the second embodiment. A packaging material 200 illustrated in FIG. 4 includes the laminate 20 described above, and includes the sealant layer 11, the first adhesive layer 12, the core layer 1b, the skin layer 1a, the anchor coat layer 2, the inorganic barrier layer 3, the second adhesive layer 13, and the second substrate layer 14 in this order.

As described in connection with the laminates 10 and 20, the packaging materials 100 and 200 according to the present embodiment are excellent in the gas barrier properties, the abuse resistance, and the adhesion, after the retort treatment. The packaging materials 100 and 200 according to the present embodiment can maintain good gas barrier properties and can maintain high interlayer adhesive force even when receiving the physical stress such as bending after the treatment under the high-temperature and high-pressure or high-temperature and high-humidity environment such as the retort treatment. Of the layers included in the packaging materials 100 and 200, layers other than the layers included in the laminates 10 and 20 will be described below.

(Sealant layer)

The sealant layer 11 is formed on a surface of each of the laminates 10 and 20 on the first substrate layer 1 side with the first adhesive layer 12 interposed therebetween. The sealant layer 11 imparts sealability by heat sealing in the packaging materials 100 and 200.

The sealant layer 11 may contain a thermoplastic resin, and a polyolefin-based resin is suitably used as the thermoplastic resin. The sealant layer 11 preferably contains the polyolefin film, and may be made of the polyolefin film.

Specific examples of the polyolefin-based resin contained in the sealant layer 11 include: ethylene-based resins such as a low-density polyethylene resin (LDPE), a medium-density polyethylene resin (MDPE), a linear low-density polyethylene resin (LLDPE), an ethylene-vinyl acetate copolymer (EVA), an ethylene-$\alpha$-olefin copolymer, and an ethylene- (meth)acrylic acid copolymer; a blend resin of polyethylene and polybutene; and polypropylene-based resins such as homopolypropylene resins (PP), propylene-ethylene random copolymers, propylene-ethylene block copolymers, and propylene-$\alpha$-olefin copolymers. The thermoplastic resin to be used as a material of the sealant layer 11 can be appropriately selected depending on an intended use of the packaging materials 100 and 200 and temperature conditions of the boil treatment, the retort treatment, or the like.

Various additives such as a flame retardant, a slipping agent, an anti-blocking agent, an antioxidant, a light stabilizer, and a tackifier may be added to the polyolefin film constituting the sealant layer 11.

A thickness of the sealant layer 11 is determined by mass of the content contained in the package including the packaging materials 100 and 200, a shape of the package, and the like, and is preferably in a range of about 30 to 150 $\mu$m.

The sealant layer 11 can be formed by a known lamination method such as a dry lamination method in which a film-like sealant layer is bonded with an adhesive such as a one-liquid curable or two-liquid curable urethane-based adhesive, a non-solvent dry lamination method in which the film-like sealant layer is bonded using a solvent-free adhesive, or an extrusion lamination method in which the above-mentioned thermoplastic resin is heated and melted, extruded into a curtain shape, and bonded.

Among the above forming methods, the dry lamination method is preferable because it has high resistance to the retort treatment, particularly high temperature hot water treatment at 120°C or higher. On the other hand, the lamination method is not particularly limited as long as it is used for the purpose of treating the package at a temperature of 85°C or lower.

(Second substrate layer)

The second substrate layer 14 is formed on a surface of each of the laminates 10 and 20 on the inorganic barrier layer 3 side with the second adhesive layer 13 interposed therebetween. The second substrate layer 14 may be made of the polyolefin film. Examples of the polyolefin film include a polyethylene film (PE), a polypropylene film (PP), and a polybutene film (PB). Further, examples of the polyolefin film include the acid-modified polyolefin film obtained by graft-modifying the polyolefin using the unsaturated carboxylic acid, the acid anhydride of the unsaturated carboxylic acid, the ester of the unsaturated carboxylic acid, or the like.

The polyolefin film constituting the second substrate layer 14 may be the stretched film or the non-stretched film. From the viewpoint of impact resistance, heat resistance, water resistance, dimensional stability, and the like, the polyolefin film may be the stretched film. Thus, the packaging materials 100 and 200 can be made more suitable for use in which the retort treatment or the boil treatment is performed. A stretching method is not particularly limited. The stretching method may be any method as long as the film having stable dimensions can be supplied, such as stretching by inflation, uniaxial stretching, or biaxial stretching.

A thickness of the second substrate layer 14 is not particularly limited. Depending on the use of the packaging materials 100 and 200, the thickness of the second substrate layer 14 can be, for example, in the range of 6 to 200 $\mu$m. From the viewpoint of obtaining excellent impact resistance and excellent gas barrier properties, the thickness of the second substrate layer 14 may be in the range of 9 to 50 $\mu$m or in the range of 12 to 38 $\mu$m.

A surface of the second base layer 14 on a side of the laminates 10 and 20 may be subjected to various pretreatments such as the corona treatment, the plasma treatment, and the frame treatment, or may be provided with the coating layer such as the easily adhesive layer, as long as the barrier performance is not impaired.

(First adhesive layer)

The packaging materials 100 and 200 include the first adhesive layer 12 between the sealant layer 11 and the first substrate layer 1 to bond them together. As a material of the first adhesive layer 12, for example, a polyester-isocyanate-based resin, a urethane resin, a polyether-based resin, or the like can be used. When using the package including the packaging materials 100 and 200 for retort applications, the two-liquid curable urethane-based adhesive having retort resistance can be preferably used.

A thickness of the first adhesive layer 12 is not particularly limited, and is preferably in a range of 0.5 to 8.0 $\mu$m, and more preferably in a range of 2.0 to 4.0 $\mu$m. When the thickness of the first adhesive layer 12 exceeds the above upper limit value, the cost tends to increase due to the increase in the amount of material used, the increase in the film formation time, and the like, which is not preferable from the economic point of view, either. When the thickness of the first adhesive layer 12 is less than the above lower limit value, sufficient interlayer adhesive strength cannot be obtained.

(Second adhesive layer)

The packaging materials 100 and 200 include the second adhesive layer 13 between the second substrate layer 14 and the inorganic barrier layer 3 to bond them together. A material of the second adhesive layer 13 is similar to that of the first adhesive layer 12 described above. Further, a thickness of the second adhesive layer 13 is also similar to that of the second adhesive layer 13 described above.

[Third embodiment]

According to a third embodiment of the present invention, the package including the above-described packaging material 100 is provided. In addition, the package including the above-described packaging material 200 is provided. These packages may be known bags such as a back-sealed bag, a three-sided bag, a two-sided bag, a standing pouch, or a gusset bag, or may be containers including a container body having an opening and a lid for closing the opening. In the latter case, the packaging materials 100 and 200 can be used as at least part of the lid.

As described in connection with the laminates 10 and 20 and the packaging materials 100 and 200, the package according to the present embodiment is excellent in the abuse resistance and the adhesion. The package according to the present embodiment can maintain good gas barrier properties and can maintain high interlayer adhesive force even when receiving the physical stress such as bending after the treatment under the high-temperature and high-pressure or high-temperature and high-humidity environment such as the retort treatment. Therefore, the package according to the present embodiment is suitably used as, for example, a retort pouch.

[Fourth embodiment]

According to a fourth embodiment of the present invention, there is provided a packaged article including the above-described package and the content contained in the package. In the package, for example, the sealant layer 11 is in contact with a space for containing the content. Any content can be used. According to one example, the content has fluidity such as a liquid or an aggregate of rice.

[Examples]

Hereinafter, tests conducted in connection with the present invention will be described.

<1> Test example 1

<1.1> Preparation of anchor coat agent AC1

The following TAKELAC WPB-341A as a main agent and the following TAKENATE WD-725 as the curing agent were mixed at the solid content mass ratio of curing agent/main agent = 34.7/100 to prepare an anchor coat agent AC1.

- TAKELAC WPB-341A: the aqueous dispersion of the polyurethane resin formed from the acid group-containing polyurethane and the polyamine, manufactured by Mitsui Chemicals, Inc., solid content concentration 30 mass%
- TAKENATE WD-725: an aqueous dispersion of a polyisocyanate having a nonionic group introduced therein, manufactured by Mitsui Chemicals, Inc., solid content concentration 99 mass%

<1.2> Production of packaging material

(Example 1)

The packaging material 100 illustrated in FIG. 3 was produced by the following method.
First, as the first substrate layer 1, a stretched polypropylene film (thickness: 20 $\mu$m) having one surface subjected to the corona treatment was prepared. The anchor coat agent AC1 prepared above was applied to a corona-treated surface of the first substrate layer 1 by a gravure roll coating method, and dried and cured at 60°C to form the anchor coat layer 2 (thickness 1.2 $\mu$m).
Subsequently, a transparent inorganic oxide layer (silica vapor deposition layer) made of silicon oxide and having a thickness of 40 nm was formed as the inorganic barrier layer 3 on the anchor coat layer 2 using a vacuum vapor deposition apparatus by the electron beam heating method to obtain the laminate 10.
Subsequently, a two-liquid curable polyurethane-based adhesive (TAKELAC A525/TAKENATE A52, manufactured by Mitsui Chemicals, Inc.) was applied to a surface of the laminate 10 obtained above on the first substrate layer 1 side so that the film thickness after drying was 3 $\mu$m to form the first adhesive layer 12, and the sealant layer 11 was dry-laminated. As the sealant layer 11, a non-stretched polypropylene film (casted polypropylene; CPP) having a thickness of 100 $\mu$m was used.
Subsequently, the same two-liquid curable polyurethane-based adhesive as that of the first adhesive layer 12 was applied to the surface of the laminate 10 on the inorganic barrier layer 3 side so that the film thickness after drying was 3 $\mu$m to form the second adhesive layer 13, and the second substrate layer 14 was dry-laminated. As the second substrate layer 14, a stretched polypropylene (an oriented polypropylene; OPP) having a thickness of 30 $\mu$m was used. Thus, the packaging material 100 illustrated in FIG. 3 was obtained.

(Example 2)

The packaging material 100 was produced by the same method as in Example 1 except the following points. That is, in this example, as the anchor coat agent, an anchor coat agent AC2 mixed at the solid content mass ratio of curing agent/main agent = 41.3/100 was used instead of using the anchor coat agent AC1 obtained by mixing the main agent and the curing agent at the solid content mass ratio of curing agent/main agent = 34.7/100.

(Example 3)

The packaging material 100 was produced by the same method as in Example 1 except the following points. That is, in this example, as the anchor coat agent, an anchor coat agent AC3 mixed at the solid content mass ratio of curing agent/main agent = 47.2/100 was used instead of using the anchor coat agent AC1 obtained by mixing the main agent and the curing agent at the solid content mass ratio of curing agent/main agent = 34.7/100.

(Example 4)

The packaging material 100 was produced by the same method as in Example 3 except the following points. That is, in this example, the thickness of the anchor coat layer 2 was changed from 1.2 μm to 0.5 μm.

(Example 5)

The packaging material 100 was produced by the same method as in Example 3 except the following points. That is, in this example, the thickness of the anchor coat layer 2 was changed from 1.2 μm to 2.8 μm.

(Comparative Example 1)

The packaging material 100 was produced by the same method as in Example 1 except the following points. That is, in this comparative example, as the anchor coat agent, an anchor coat agent AC1R mixed at the solid content mass ratio of curing agent/main agent = 28.7/100 was used instead of using the anchor coat agent AC1 obtained by mixing the main agent and the curing agent at the solid content mass ratio of curing agent/main agent = 34.7/100.

(Comparative Example 2)

The packaging material 100 was produced by the same method as in Example 1 except the following points. That is, in this comparative example, as the anchor coat agent, an anchor coat agent AC2R mixed at the solid content mass ratio of curing agent/main agent = 51.5/100 was used instead of using the anchor coat agent AC1 obtained by mixing the main agent and the curing agent at the solid content mass ratio of curing agent/main agent = 34.7/100.

(Comparative Example 3)

The packaging material 100 was produced by the same method as in Example 3 except the following points. That is, in this comparative example, the thickness of the anchor coat layer 2 was changed from 1.2 μm to 0.3 μm.

(Comparative Example 4)

The packaging material 100 was produced by the same method as in Example 3 except the following points. That is, in this comparative example, the thickness of the anchor coat layer 2 was changed from 1.2 μm to 3.2 μm.

<1.3> Evaluation

(Composite elastic modulus)

The sectional composite elastic modulus of the anchor coat layer 2 of the packaging material according to each of Examples 1 to 5 and Comparative Examples 1 to 4 was measured using the nanoindentation method.

[Preparation of measurement sample]

Both surfaces of the packaging material (hereinafter, also simply referred to as a "film") according to each of Examples 1 to 5 and Comparative Examples 1 to 4 were subjected to the corona treatment at 0.20 kW (apparatus: corona treatment machine CT-0212 manufactured by Kasuga Denki, Inc.), and then the film was cut into a wedge shape having a base of 1.0 mm and a height of 5.0 mm with a razor. The cut film was embedded in a photocurable resin, and cured with a halogen lamp KTX-100R (manufactured by Kenko Tokina Corporation). As the photocurable resin, D-800 manufactured by Toagosei Co., Ltd. was used.
The photocured film-embedded resin was fixed with an AFM sample holder insert, and a cross section of the film was cut with a glass knife at room temperature (25°C). Thereafter, final sectional cutting was performed with a diamond knife at room temperature with settings of a cutting speed of 1.0 mm/s and a cutting layer thickness of 500 nm, and the cutting was completed when a mirror surface was obtained. As a sectional cutting apparatus, an Ultramicrotome (EM UC7 manufactured by Leica Corporation) and a Cryosystem (EM FC7 manufactured by Leica Corporation) were used. A cutting direction of the knife was parallel to a layer interface.

[Measurement of composite elastic modulus by nanoindentation method]

Hysitron TI-Premier (trade name) manufactured by Bruker Japan K.K. was used as the measuring apparatus, and the Berkovich type diamond indenter manufactured by Bruker Japan K.K. was used as the indenter.

Measurement by the nanoindentation method was performed by indentation to a depth of 50 nm at an indentation speed of 50 nm/sec, holding at the maximum depth for 1 second, and then unloading at a speed of 50 nm/sec, in a displacement control mode.

The measurement was performed by acquiring a shape image of a sample section by a shape measuring function of a measuring apparatus that scans a sample surface with the indenter, and designating 20 points on a target layer (the anchor coat layer 2) at intervals of 1 $\mu$m or more from the shape image.

In calculation of the composite elastic modulus, fused quartz as a standard sample was tested in advance, and a relationship between the contact depth and the contact projection area of the indenter and the sample was calibrated. Thereafter, the unloading curve in a range of 60 to 95% with respect to the maximum load at the time of unloading was analyzed by the Oliver-Pharr method to calculate the composite elastic modulus.

(Gas barrier properties, abuse resistance and adhesion after retort treatment)

Using the packaging materials according to Examples 1 to 5 and Comparative Examples 1 to 4, samples for evaluation of the gas barrier properties, the abuse resistance, and the adhesion, after the retort treatment were prepared. First, 20 cm×20 cm test pieces were cut out from each packaging material in 3 sets of 2 pieces, and 3 sets were prepared by stacking two test pieces together with the sealant layer on an inside. Then, three sides of each were heat-sealed to form a bag shape. Subsequently, after each was filled with water, a remaining side was heat-sealed to prepare three sets of evaluation samples for each packaging material. These samples were subjected to the retort treatment at 0.2MPa and 121°C for 30 minutes using a hot water storage type retort oven, and then the gas barrier properties, the abuse resistance, and the adhesion were evaluated by methods described below.

<Gas barrier properties>

An oxygen transmission rate (OTR) of each sample after the retort treatment was measured under conditions of a temperature of 30°C and a relative humidity of 70% using an oxygen transmission tester OX-TRAN (registered trademark) 2/20 manufactured by Modern Control, Inc. The measurement method was performed in accordance with JIS K-7126 Method B (Equal-pressure method) and ASTM D3985. From measurement results, the gas barrier properties after the retort treatment was evaluated based on the following criteria.

A: Oxygen transmission rate is 10 cc/m$^2$/day/atm or less, and gas barrier properties after retort treatment are excellent
B: Oxygen transmission rate is more than 10 cc/m$^2$/day/atm, and gas barrier properties after retort treatment cannot be said to be excellent

<Abuse resistance>

Each sample after the retort treatment was subjected to a Gelbo flex test with 5 bending using a Gelbo flex tester manufactured by TESTER SANGYO CO., LTD., specified in MIL B131 (ASTMF392). For each sample after the Gelbo flex test, the oxygen transmission rate was measured under the same conditions and by the same method as above. From the measurement results, the abuse resistance after the retort treatment was evaluated based on the following criteria.

A: Oxygen transmission rate is 20 cc/m$^2$/day/atm or less, and abuse resistance after retort treatment is excellent
B: Oxygen transmission rate is more than 20 cc/m$^2$/day/atm, and abuse resistance after retort treatment cannot be said to be excellent

<Adhesion>

For each sample after the retort treatment, 180° peel strength between the anchor coat layer 2 and the inorganic barrier layer 3 was measured using a tensile tester Tensilon RTC-1250 manufactured by ORIENTEC CO., LTD. From the measurement results, the adhesion after the retort treatment was evaluated according to the following criteria.

A: Peeling strength is 2.0 N/15 mm or more, and adhesion after retort treatment is very excellent
B: Peeling strength is 1.5 N/15 mm or more and less than 2.0 N/15 mm, and adhesion after retort treatment is excellent
C: Peeling strength is less than 1.5 N/15 mm, and adhesion after retort treatment cannot be said to be excellent

Results and evaluations of the measurement and test for each packaging material are summarized in Table 1 below.

[Table 1]

Table 1

| | | AC agent (solid content ratio) | | AC agent | AC agent | OTR | | | | Adhesion after retort treatment |
|---|---|---|---|---|---|---|---|---|---|---|
| | | Main agent Polyurethane | Curing agent Isocyanate | Film thickness [μm] | Composite elastic modulus [GPa] | Gas barrier properties after retort treatment [cc/m$^2$/day/atm] | | Abuse resistance after retort treatment [cc/m$^2$/day/atm] | | |
| | | WPB-341A | WD-725 | | | | | | | |
| Ex.1 | AC1 | 100.0 | 34.7 | 1.2 | 4.0 | 3.4 | A | 13.2 | A | B |
| Ex.2 | AC2 | 100.0 | 41.3 | 1.2 | 5.0 | 3.3 | A | 16.4 | A | A |
| Ex.3 | AC3 | 100.0 | 47.2 | 1.2 | 5.8 | 3.2 | A | 19.2 | A | A |
| Ex.4 | AC3 | 100.0 | 47.2 | 0.5 | 5.0 | 9.6 | A | 18.8 | A | A |
| Ex.5 | AC3 | 100.0 | 47.2 | 2.8 | 5.9 | 2.8 | A | 19.4 | A | A |
| Comp.Ex.1 | AC1R | 100.0 | 28.7 | 1.2 | 3.3 | 3.6 | A | 8.9 | A | C |
| Comp.Ex.2 | AC2R | 100.0 | 51.5 | 1.2 | 7.0 | 3.1 | A | 23.1 | B | A |
| Comp.Ex.3 | AC3 | 100.0 | 47.2 | 0.3 | 4.5 | 11.6 | B | 21.0 | B | A |
| Comp.Ex.4 | AC3 | 100.0 | 47.2 | 3.2 | 5.9 | 2.7 | A | 22.1 | B | C |

From the results shown in Table 1, it can be seen that in the anchor coat layer 2, by setting the film thickness to be in the range of 0.3 to 4.0 μm and setting the sectional composite elastic modulus to be in the range of 3.5 to 6.5GPa, excellent adhesion and abuse resistance are imparted to the packaging material (laminate). Therefore, the package containing the packaging material according to the present embodiment can maintain good gas barrier properties and can maintain high interlayer adhesive force even when receiving the physical stress such as bending after the treatment under the high-temperature and high-pressure or high-temperature and high-humidity environment such as the retort treatment or the boil treatment.

<2> Test example 2

<2.1> Preparation of first substrate layer

<2.1.1> Preparation of first substrate layer 1A

An ethylene-1-butene-propylene random copolymer resin (ethylene content: 5 mol%, 1-butene content: 6 mol%) was prepared as a material of the skin layer 1a, and a homopolypropylene resin was prepared as a material for the core layer 1b. These resins were co-extruded and then biaxially stretched to prepare a first substrate layer 1A having a thickness of 20 μm and including the skin layer 1a having a thickness of 0.7 μm and the core layer 1b having a thickness of 19.3 μm.

<2.1.2> Preparation of first substrate layer 1B

A first substrate layer 1B was prepared under the same conditions as for the first substrate layer 1A except that as the material of the skin layer 1a, an ethylene-propylene random copolymer resin (ethylene content: 7.5 mol%) was used in place of the ethylene-1-butene-propylene random copolymer resin (ethylene content: 5 mol%, 1-butene content: 6 mol%).

<2.1.3> Preparation of first substrate layer 1C

A first substrate layer 1C was prepared under the same conditions as for the first substrate layer 1A except that as the material of the skin layer la, an ethylene-1-butene-propylene random copolymer resin (ethylene content: 2.5 mol%, 1-butene content: 3.5 mol%) was used in place of the ethylene-1-butene-propylene random copolymer resin (ethylene content: 5 mol%, 1-butene content: 6 mol%).

<2.1.4> Preparation of first substrate layer 1D

A first substrate layer 1D was prepared under the same conditions as for the first substrate layer 1A except that as the material of the skin layer 1a, an ethylene-propylene random copolymer resin (ethylene content: 5.0 mol%) was used in place of the ethylene-1-butene-propylene random copolymer resin (ethylene content: 5 mol%, 1-butene content: 6 mol%).

<2.1.5> Preparation of first substrate layer 1E

A first substrate layer 1E was prepared under the same conditions as for the first substrate layer 1A except that as the material of the skin layer 1a, an ethylene-propylene random copolymer resin (ethylene content: 3.2 mol%) was used in place of the ethylene-1-butene-propylene random copolymer resin (ethylene content: 5 mol%, 1-butene content: 6 mol%).

<2.1.6> Preparation of first substrate layer 1F

A first substrate layer 1F was prepared under the same conditions as for the first substrate layer 1A except that as the material of the skin layer 1a, an ethylene-propylene random copolymer resin (ethylene content: 0.7 mol%) was used in place of the ethylene-1-butene-propylene random copolymer resin (ethylene content: 5 mol%, 1-butene content: 6 mol%).

<2.1.7> Preparation of first substrate layer 1G

A first substrate layer 1G was prepared under the same conditions as for the first substrate layer 1A except that as the material of the skin layer 1a, an ethylene-propylene random copolymer resin (ethylene content: 0.6 mol%) was used in place of the ethylene-1-butene-propylene random copolymer resin (ethylene content: 5 mol%, 1-butene content: 6 mol%).

<2.1.8> Preparation of first substrate layer 1H

A first substrate layer 1I was prepared under the same conditions as for the first substrate layer 1A except that the thickness of the skin layer 1a was changed from 0.7 $\mu$m to 1.8 $\mu$m and the thickness of the core layer 1b was changed from 19.3 $\mu$m to 18.2 $\mu$m.

<2.1.9> Preparation of first substrate layer 1I

A first substrate layer 1J was prepared under the same conditions as for the first substrate layer 1A except that the thickness of the skin layer 1a was changed from 0.7 $\mu$m to 0.2 $\mu$m and the thickness of the core layer 1b was changed from 19.3 $\mu$m to 19.8 $\mu$m.

<2.2> Preparation of anchor coat agent

<2.2.1> Preparation of anchor coat agent AC3R

An anchor coat agent AC3R was prepared under the same conditions as for the anchor coat agent AC1 except that the solid content mass ratio of the main agent and the curing agent was changed from curing agent/main agent = 47.2/100 to 54.5/100.

In addition to the anchor coat agent AC3R prepared here, the anchor coat agents AC1 to AC3, ACR1, and ACR2 prepared in the test example 1 were used.

<2.3> Production of packaging material

<2.3.1> Example 6

The packaging material 200 illustrated in FIG. 4 was produced by the following method.

First, the anchor coat agent AC3 prepared above was applied to a surface of the first base substrate layer 1A prepared above on the skin layer 1a side by the gravure roll coating method, and dried and cured at 60°C to form the anchor coat layer 2 (thickness 1.0 $\mu$m).

Subsequently, the transparent inorganic oxide layer (silica vapor deposition layer) made of silicon oxide and having a thickness of 40 nm was formed as the inorganic barrier layer 3 on the anchor coat layer 2 using the vacuum vapor deposition apparatus by the electron beam heating method to obtain the laminate 20.

Subsequently, a two-liquid curable polyurethane-based adhesive (main agent: TAKELAC A525, curing agent: TAKENATE A52, manufactured by Mitsui Chemicals, Inc.) was applied to a surface of the laminate 20 obtained above on the first substrate layer 1 side so that the film thickness after drying was 3 $\mu$m to form the first adhesive layer 12, and the sealant layer 11 was dry-laminated. As the sealant layer 11, a non-stretched polypropylene film (casted polypropylene; CPP) having a thickness of 100 $\mu$m was used.

Subsequently, the same two-liquid curable polyurethane-based adhesive as that of the first adhesive layer 12 was applied to the surface of the laminate 20 on the inorganic barrier layer 3 side so that the film thickness after drying was 3 $\mu$m to form the second adhesive layer 13, and the second base material layer 14 was dry-laminated. As the second substrate layer 14, a stretched polypropylene (an oriented polypropylene; OPP) having a thickness of 30 $\mu$m was used. Thus, the packaging material 200 illustrated in FIG. 4 was obtained.

(Examples 7 to 17 and Comparative Examples 5 to 7)

The packaging materials according to Examples 7 to 17 and Comparative Examples 5 to 7 were produced under the same conditions as in Example 6 except that the first substrate layer 1A or the anchor coat agent AC3 used in Example 6 was changed to those shown in Table 2.

<2.4> Measurement and evaluation of hardness <2.4.1> Hardness

For each of the packaging materials according to Examples 6 to 17 and Comparative Examples 5 to 7, the sectional hardness of the skin layer 1a and the anchor coat layer 2(hereinafter, each is referred to as a "target layer") was measured by the nanoindentation method.

[Preparation of measurement sample]

Both surfaces of each of the packaging materials (hereinafter, also referred to as a "film".) were subjected to the corona treatment at 0.20 kW (apparatus: corona treatment machine CT-0212 manufactured by Kasuga Denki, Inc.), and then the film was cut into the wedge shape having a base of 1.0 mm and a height of 5.0 mm with the razor. The cut film was embedded in a photocurable resin, and cured with a halogen lamp KTX-100R (manufactured by KenkoTokina Corporation). As the photocurable resin, D-800 manufactured by Toagosei Co., Ltd. was used.

The photocured film-embedded resin was fixed with an AFM sample holder insert, and a cross section of the film was cut with a glass knife at room temperature (25°C). Thereafter, final sectional cutting was performed with the diamond knife at room temperature with settings of the cutting speed of 1.0 mm/s and the cutting layer thickness of 100 nm, and the cutting was completed when the mirror surface was obtained. As a sectional cutting apparatus, an Ultramicrotome (EM UC7 manufactured by Leica Corporation) and a Cryosystem (EM FC7 manufactured by Leica Corporation) were used. A cutting direction of the knife was parallel to a layer interface.

[Measurement of hardness by nanoindentation method]

Hysitron TI-Premier (trade name) manufactured by Bruker Japan K.K. was used as the measuring apparatus, and the Berkovich type diamond indenter manufactured by Bruker Japan K.K. was used as the indenter.

The measurement by the nanoindentation method was performed by indentation to a depth of 30 nm at an indentation speed of 30 nm/sec, holding at the maximum depth for 1 second, and then unloading at a speed of 30 nm/sec, in the displacement control mode.

The measurement was performed by acquiring the shape image of the sample section by the shape measuring function of the measuring apparatus that scans the sample surface with the indenter, and designating 20 points on the target layer at intervals of 1 μm or more from the shape image.

In calculation of the hardness, the fused quartz as the standard sample was tested in advance, and the relationship between the contact depth and the contact projection area of the indenter and the sample was calibrated. Thereafter, the unloading curve in the range of 60 to 95% with respect to the maximum load at the time of unloading was analyzed by the Oliver-Pharr method to calculate the hardness. As a result, the hardness of the anchor coat layer 2 was in a range of 200 to 350MPa in each of Examples 6 to 17, less than 200MPa in Comparative Example 5, and more than 350MPa in Comparative Examples 6 and 7. Results of the hardness of the skin layer 1a are shown in Table 2.

<2.4.2> Composite elastic modulus

The sectional composite elastic modulus of the anchor coat layer 2 of each packaging material was measured using the nanoindentation method.

Preparation of the measurement sample and measurement of the composite elastic modulus by the nanoindentation method were performed under the same conditions as in the test example 1. The results are shown in Table 2.

<2.4.3> Gas barrier properties, abuse resistance, and adhesion after retort treatment

Using the packaging materials according to Examples 1 to 12 and Comparative Examples 1 to 6, samples for evaluation of the gas barrier properties, the abuse resistance, and the adhesion, after the retort treatment were prepared. First, 20 cm×20 cm test pieces were cut out from each packaging material in 3 sets of 2 pieces, and 3 sets were prepared by stacking two test pieces together with the sealant layer 11 on the inside. Then, three sides of each were heat-sealed to form a bag shape. Subsequently, after each was filled with water, a remaining side was heat-sealed to prepare three sets of evaluation samples for each packaging material. These samples were subjected to the retort treatment at 0.2MPa and 120°C for 30 minutes using the hot water storage type retort oven, and then the gas barrier properties, the abuse resistance, and the adhesion were evaluated by methods described below. The results are shown in Table 2.

<Gas barrier properties>

The oxygen transmission rate (OTR) of each sample after the retort treatment was measured under the same conditions as in the test example 1. From the measurement results, the gas barrier properties after the retort treatment was evaluated based on the same criteria as in the test example 1.

<Abuse resistance>

For each sample after the retort treatment, the Gelbo flex test was performed under the same conditions as in the test example 1, and then the oxygen transmission rate was measured under the same conditions as in the test example 1. From the measurement results, the abuse resistance after the retort treatment was evaluated based on the same criteria as in the test example 1.

<Adhesion 1>

For each sample after the retort treatment, 180° peel strength between the first substrate layer 1 and the anchor coat layer 2 was measured using the tensile tester Tensilon RTC-1250 manufactured by ORIENTEC CO., LTD. From the measurement results, the adhesion after the retort treatment was evaluated according to the following criteria.

A: Peeling strength is 2.0 N/15 mm or more, and adhesion after retort treatment is very excellent
B: Peeling strength is 1.5 N/15 mm or more and less than 2.0 N/15 mm, and adhesion after retort treatment is excellent
C: Peeling strength is less than 1.5 N/15 mm, and adhesion after retort treatment cannot be said to be excellent

<Adhesion 2>

For each sample after the retort treatment, 180° peel strength between the anchor coat layer 2 and the inorganic barrier layer 3 was measured using a tensile tester Tensilon RTC-1250 manufactured by ORIENTEC CO., LTD. From the measurement results, the adhesion after the retort treatment was evaluated according to the following criteria.

A: Peeling strength is 2.0 N/15 mm or more, and adhesion after retort treatment is very excellent
B: Peeling strength is 1.5 N/15 mm or more and less than 2.0 N/15 mm, and adhesion after retort treatment is excellent
C: Peeling strength is less than 1.5 N/15 mm, and adhesion after retort treatment cannot be said to be excellent

[Table 2]

Table 2

| | First substrate layer (film thickness 20 [μm]) | | | AC agent (film thickness 1.0 [μm]) | | | | OTR | | | | Adhesion after retort treatment | |
|---|---|---|---|---|---|---|---|---|---|---|---|---|---|
| | | Skin layer | | | Solid content ratio | | | | | | | Adhesion 1 | Adhesion 2 |
| | Type | Film thickness [μm] | Hardness [MPa] | Type | Main agent WP-B-341-A | Curing agent W-D-725 | Composite elastic modulus [GPa] | Gas barrier properties after retort treatment [cc/m²/day/atm] | | Abuse resistance after retort treatment [cc/m²/day/atm] | | First substrate layer/AC layer | Inorganic barrier layer/AC layer |
| Ex.6 | 1A | 0.7 | 18 | AC1 | 100.0 | 47.2 | 6.1 | 3.3 | A | 10.9 | A | B | A |
| Ex.7 | 1B | 0.7 | 39 | AC1 | 100.0 | 47.2 | 6.1 | 4.7 | A | 11.7 | A | A | A |
| Ex.8 | 1C | 0.7 | 65 | AC1 | 100.0 | 47.2 | 6.1 | 5.4 | A | 13.9 | A | A | A |
| Ex.9 | 1D | 0.7 | 67 | AC1 | 100.0 | 47.2 | 6.1 | 5.5 | A | 14.1 | A | A | A |
| Ex.10 | 1E | 0.7 | 88 | AC1 | 100.0 | 47.2 | 6.1 | 6.7 | A | 15.6 | A | A | A |
| Ex.11 | 1F | 0.7 | 97 | AC1 | 100.0 | 47.2 | 6.1 | 7.1 | A | 16.1 | A | A | A |
| Ex.12 | 1G | 0.7 | 147 | AC1 | 100.0 | 47.2 | 6.1 | 9.7 | A | 19.6 | A | A | A |
| Ex.13 | 1G | 0.7 | 147 | AC2 | 100.0 | 34.7 | 3.7 | 9.7 | A | 14.1 | A | A | A |
| Ex.14 | 1G | 0.7 | 147 | AC3 | 100.0 | 41.3 | 5.1 | 9.7 | A | 17.4 | A | A | A |
| Ex.15 | 1G | 0.7 | 147 | AC1 | 100.0 | 47.2 | 6.1 | 9.7 | A | 19.6 | A | A | A |
| Ex.16 | 1H | 1.8 | 17 | AC1 | 100.0 | 47.2 | 6.1 | 3.3 | A | 10.9 | A | B | A |
| Ex.17 | 1I | 0.2 | 20 | AC1 | 100.0 | 47.2 | 6.1 | 3.3 | A | 10.9 | A | A | A |
| Comp.Ex.5 | 1G | 0.7 | 147 | AC1R | 100.0 | 28.7 | 3.4 | 9.7 | A | 12.4 | A | A | C |
| Comp.Ex.6 | 1G | 0.7 | 147 | AC2R | 100.0 | 51.5 | 6.8 | 9.7 | A | 24.1 | B | A | A |
| Comp.Ex.7 | 1G | 0.7 | 147 | AC3R | 100.0 | 54.5 | 7.2 | 9.7 | A | 31.3 | B | A | A |

Note that the present invention is not limited to the above embodiments, and various modifications can be made in an implementation stage without departing from the gist of the present invention. In addition, the embodiments may be implemented in appropriate combination, and in that case, a combined effect can be obtained. Furthermore, the above-described embodiments include various inventions, and various inventions can be extracted by a combination selected from a plurality of disclosed components. For example, even when some components are deleted from all the components shown in the embodiment, when the problem can be solved and the effect can be obtained, a configuration in which the components are deleted can be extracted as the invention.

REFERENCE SIGNS LIST

| | |
|---|---|
| 1 | First substrate layer |
| 1a | Skin layer |
| 1b | Core layer |
| 2 | Anchor coat layer |
| 3 | Inorganic barrier layer |
| 10 | Laminate |
| 11 | Sealant layer |
| 12 | First adhesive layer |
| 13 | Second adhesive layer |
| 14 | Second substrate layer |
| 20 | Laminate |
| 100 | Packaging material |
| 200 | Packaging material |

**Claims**

1. A laminate comprising a first substrate layer, an anchor coat layer, and an inorganic barrier layer in this order, wherein the first substrate layer contains a polyolefin, and the anchor coat layer has a sectional composite elastic modulus in a range of 3.5 to 6.5GPa and a thickness in a range of 0.4 to 3.0 $\mu$m.

2. The laminate according to claim 1, wherein the first substrate layer has a layer structure including a skin layer in contact with the anchor coat layer and a core layer, the anchor coat layer has a sectional hardness in a range of 200MPa or more and 350MPa or less, and the skin layer has a sectional hardness of 150MPa or less.

3. The laminate according to claim 2, wherein the skin layer has a sectional hardness of 20MPa or more.

4. The laminate according to claim 2 or 3, wherein a thickness of the skin layer is in a range of 0.2 to 1.8 $\mu$m.

5. The laminate according to any one of claims 1 to 4, wherein the anchor coat layer is a cured film of an anchor coat agent containing a polyurethane resin and a curing agent, and a solid content mass ratio [curing agent/polyurethane resin] of the polyurethane resin and the curing agent in the anchor coat agent is in a range of 30/100 to 50/100.

6. The laminate according to any one of claims 1 to 5, wherein the inorganic barrier layer contains silicon oxide or aluminum oxide.

7. A packaging material comprising the laminate according to any one of claims 1 to 6.

8. The packaging material according to claim 7, comprising a sealant layer formed on a surface of the laminate on the first substrate layer side with a first adhesive layer interposed therebetween, and a second substrate layer formed on a surface of the laminate on the inorganic barrier layer side with a second adhesive layer interposed therebetween.

9. The packaging material according to claim 7 or 8, for a retort pouch.

10. A package comprising the packaging material according to any one of claims 7 to 9.

11. A packaged article comprising the package according to claim 10 and a content contained in the package.

10

3
2
1

F I G. 1

20

3
2
1a } 1
1b }

F I G. 2

100

F I G. 3

200

F I G. 4

# FIG. 5

# FIG. 6

## INTERNATIONAL SEARCH REPORT

| International application No. |
|---|
| **PCT/JP2024/003087** |

### A. CLASSIFICATION OF SUBJECT MATTER

*B32B 9/00*(2006.01)i; *B32B 27/32*(2006.01)i; *B32B 27/40*(2006.01)i; *B65D 65/40*(2006.01)i
FI:   B32B9/00 A; B32B27/40; B65D65/40 D; B65D65/40 A; B32B27/32 Z

According to International Patent Classification (IPC) or to both national classification and IPC

### B. FIELDS SEARCHED

Minimum documentation searched (classification system followed by classification symbols)

B32B9/00; B32B27/32; B32B27/40; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2013/147090 A1 (LINTEC CORPORATION) 03 October 2013 (2013-10-03) claims, paragraphs [0007]-[0031], [0047], [0055]-[0062], [0074], [0105]-[0129] | 1, 6 |
| A | | 2-5, 7-11 |
| A | JP 11-978 A (DAICEL CHEM. IND. LTD.) 06 January 1999 (1999-01-06) entire text | 1-11 |
| A | WO 2022/056095 A1 (AMCOR FLEXIBLES NORTH AMERICA, INC.) 17 March 2022 (2022-03-17) entire text | 1-11 |
| A | WO 2019/167944 A1 (FUJIFILM CORPORATION) 06 September 2019 (2019-09-06) entire text | 1-11 |
| A | JP 2018-173165 A (NITTO DENKO CORPORATION) 08 November 2018 (2018-11-08) entire text | 1-11 |

☑ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/003087** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2009/112256 A1 (TETRA LAVAL HOLDINGS & FINANCE S.A.) 17 September 2009 (2009-09-17) <br> entire text | 1-11 |
| A | JP 2015-208924 A (TOPPAN PRINTING CO., LTD.) 24 November 2015 (2015-11-24) <br> entire text | 1-11 |

Form PCT/ISA/210 (second sheet) (July 2022)

## INTERNATIONAL SEARCH REPORT
**Information on patent family members**

International application No.

**PCT/JP2024/003087**

| Patent document cited in search report | | | Publication date (day/month/year) | Patent family member(s) | | | Publication date (day/month/year) |
|---|---|---|---|---|---|---|---|
| WO | 2013/147090 | A1 | 03 October 2013 | US | 2015/0099094 | A1 | |
| | | | | claims, paragraphs [0011]-[0038], [0056], [0064]-[0075], [0092], [0133]-[0160] | | | |
| | | | | EP | 2839953 | A1 | |
| | | | | CN | 104203560 | A | |
| | | | | KR | 10-2015-0000879 | A | |
| | | | | TW | 201402318 | A | |
| | | | | TW | 201739617 | A | |
| JP | 11-978 | A | 06 January 1999 | (Family: none) | | | |
| WO | 2022/056095 | A1 | 17 March 2022 | US | 2023/0323059 | A1 | |
| | | | | KR | 10-2023-0088699 | A | |
| | | | | JP | 2023-541027 | A | |
| | | | | EP | 4210946 | A1 | |
| | | | | CN | 116323207 | A | |
| | | | | CL | 2023000668 | A | |
| WO | 2019/167944 | A1 | 06 September 2019 | (Family: none) | | | |
| JP | 2018-173165 | A | 08 November 2018 | WO | 2018/181433 | A1 | |
| WO | 2009/112256 | A1 | 17 September 2009 | JP | 2011-525863 | A | |
| | | | | US | 2011/0143070 | A1 | |
| | | | | EP | 2257430 | A1 | |
| | | | | CN | 102015291 | A | |
| JP | 2015-208924 | A | 24 November 2015 | US | 2017/0036832 | A1 | |
| | | | | WO | 2015/163441 | A1 | |
| | | | | EP | 3135478 | A1 | |
| | | | | CN | 106232347 | A | |

Form PCT/ISA/210 (patent family annex) (July 2022)

**EP 4 644 114 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022056095 A
- WO 2022220200 A